Europäisches Patentamt

European Patent Office

Office européen des brevets

(19)

(11) Numéro de publication : **0 452 197 A1**

# (12) DEMANDE DE BREVET EUROPEEN

(21) Numéro de dépôt : **91400918.8**

(22) Date de dépôt : **04.04.91**

(51) Int. Cl.⁵ : **G21C 19/24, G21C 19/20**

(30) Priorité : **11.04.90 FR 9004677**

(43) Date de publication de la demande :
**16.10.91 Bulletin 91/42**

(84) Etats contractants désignés :
**DE GB IT**

(71) Demandeur : **FRAMATOME**
**Tour Fiat 1, Place de la Coupole**
**F-92400 Courbevoie (FR)**

(72) Inventeur : **de Seroux, Nicolas**
**324 rue Garibaldi**
**F-69007 Lyon (FR)**
Inventeur : **Limouzin, Dominique**
**74 rue Cuvier**
**F-69006 Lyon (FR)**

(74) Mandataire : **Bouget, Lucien et al**
**Cabinet Lavoix 2, Place d'Estienne d'Orves**
**F-75441 Paris Cédex 09 (FR)**

(54) Dispositif de déplacement d'une charge suivant l'axe vertical d'un puits et hotte de manutention d'un assemblage combustible équipée d'un tel dispositif à redondance de charge et de déplacement.

(57)   Le dispositif comporte deux treuils (12, 12') fixés sur la surface extérieure d'un corps creux (2) comportant un canal vertical (3) dans lequel est déplacée la charge (4). Chacun des treuils (12, 12') comporte deux tambours (13a, 13b) entraînés par un moyen moteur commun (14). Les tambours (13a, 13b) d'un premier treuil (12) sont disposés chacun à l'opposé, par rapport à l'axe du canal (3), d'un tambour du second treuil (12'). Le dispositif comporte deux câbles (15a, 15b) qui sont communs à deux tambours placés à l'opposé l'un le l'autre autour du corps (2). Les câbles (15a, 15b) sont enroulés par leur partie d'extrémité sur les tambours situés à l'opposé l'un de l'autre et passent, sur leur parcours entre les tambours, sur des poulies de renvoi dont l'axe est fixe (16a, 16b) et sur des poulies de support de la charge dont l'axe est mobile et accompagne la charge (34a, 34b). Le dispositif assure le maintien et le déplacement de la charge dans le cas d'une panne le l'un des ensembles moteurs (14) et dans le cas d'une rupture de l'un des câbles. Le dispositif peut être utilisé en particulier pour assurer le levage d'un assemblage combustible dans une hotte de manutention de cet assemblage combustible.

EP 0 452 197 A1

FIG.1

L'invention concerne un dispositif de déplacement d'une charge suivant un axe vertical d'un puits et notamment un dispositif de levage associé à une hotte de manutention d'un assemblage combustible.

Les réacteurs nucléaires à neutrons rapides refroidis par un métal liquide tel que le sodium comportent un coeur constitué par des assemblages de forme prismatique et allongée plongés dans du sodium liquide contenu dans la cuve du réacteur.

Il peut être nécessaire de prélever des assemblages combustibles dans le coeur du réacteur, à l'intérieur de la cuve, par exemple pour remplacer des assemblages usagés ou défectueux par des assemblages neufs. Les assemblages qui sont sortis de la cuve du réacteur sont à l'état irradié et produisent des rayonnements radioactifs et un dégagement de chaleur.

Les assemblages combustibles sortis de la cuve du réacteur nucléaire doivent donc être disposés dans les conteneurs assurant la protection biologique du milieu dans lequel les assemblages sont déplacés ou stockés de manière temporaire.

On utilise habituellement pour effectuer le transfert des assemblages combustibles des réacteurs nucléaires à neutrons rapides, des hottes de manutention comportant un corps massif en un matériau absorbant les les rayonnements nucléaires dans lequel est ménagé un canal traversant le corps de la hotte dans sa direction longitudinale et dans une position centrale, servant de logement pour un assemblage combustible introduit dans la hotte de manutention.

Le canal débouche, par une ouverture obturable de manière étanche, à l'une des extrémités du corps de la hotte, de manière à permettre l'introduction d'un assemblage dans la hotte et son extraction. Pendant les opérations d'introduction et d'extraction d'un assemblage combustible dans la hotte, celle-ci est placée de manière que le canal recevant l'assemblage combustible soit dans une position verticale. Les opérations d'introduction et d'extraction d'un assemblage combustible sont effectuées grâce à un ensemble de levage comportant des treuils associés à la hotte qui permettent de déplacer l'assemblage fixé à un grappin par l'intermédiaire de son extrémité supérieure, à l'intérieur du canal traversant la hotte et dans son prolongement axial.

On assure généralement le raccordement du dispositif d'obturation du puits disposé à la partie inférieure de la hotte à un dispositif correspondant associé par exemple à un puits de passage des assemblages combustibles traversant la dalle de fermeture de la cuve du réacteur nucléaire.

Il est bien évident que les opérations de transfert des assemblages combustibles entre la cuve du réacteur et une hotte de manutention doivent être effectuées avec une très grande sûreté, des incidents tels qu'une chute d'un assemblage combustible pendant son transfert, une panne des moyens de levage de l'assemblage en cours de transfert, ou un manque de refroidissement de l'assemblage pouvant entraîner des détériorations de l'assemblage combustible ou de certains composants du réacteur, un retard important dans les opérations de manutention ou d'autres conséquences dommageables se traduisant par une augmentation des coûts d'exploitation du réacteur nucléaire.

Il peut être également nécessaire de mettre en oeuvre des procédures de secours extrêmement onéreuses et pouvant nécessiter l'intervention d'opérateurs dans les zones soumises à l'irradiation.

Les moyens de levage associés à une hotte de manutention pour assemblage combustible sont donc conçus de manière à présenter une certaine redondance, en ce qui concerne leurs possibilités de maintien et de déplacement de la charge constituée par l'assemblage combustible fixé au grappin se déplaçant dans le canal de la hotte.

De tels dispositifs de levage comportent généralement un double treuil installé à la partie supérieure de la hotte et constitué de deux arbres moteurs portant à chacune de leurs extrémités un tambour d'enroulement de câbles.

Deux câbles sont enroulés chacun sur deux tambours entraînés par des arbres moteurs différents et assurent la suspension et le déplacement d'un grappin comportant des moyens d'accrochage de la charge. Le grappin comporte un support sur lequel sont montées des poulies qui coopèrent avec les câbles pour assurer la suspension et le déplacement de la charge.

Ce dispositif qui assure une bonne sécurité de fonctionnement par le fait qu'il présente une redondance permettant de limiter les conséquences d'une rupture de câble ou d'une panne de moteur, a pour inconvénient d'augmenter considérablement l'encombrement de la hotte dont la partie supérieure porte l'ensemble des moyens de levage. La masse de ces moyens de levage conduit donc à situer le centre de gravité de l'ensemble de la hotte à une hauteur importante, ce qui a une incidence sur les dispositifs anti-séismes à prévoir.

Afin de faciliter la manutention de la hotte, lors du transfert d'un assemblage combustible, et le stockage de cette hotte pendant les périodes où elle n'est pas utilisée, il est tout-à-fait souhaitable de diminuer autant que possible le volume de cette hotte de manutention et d'abaisser la position du centre de gravité.

Le but de l'invention est donc de proposer un dispositif de déplacement d'une charge dans la direction verticale, suivant l'axe d'un canal ménagé à la partie centrale d'un corps creux, comportant au moins deux ensembles de deux tambours entraînés par deux dispositifs moteurs sur lesquels sont enroulés deux câbles de suspension et le déplacement d'un grappin mobile dans le canal et dans son prolongement axial, comportant des moyens d'accrochage de la charge et un support muni de poulies sur lesquelles passe le câble, ce dispositif de déplacement permettant d'abaisser la position du centre de gravité, d'obtenir un encombrement réduit de l'ensemble constitué par le corps creux dans lequel est ménagé le canal de déplacement de la charge et le dispositif de déplacement lui-même tout en permettant un fonctionnement avec une très grande sûreté, en particulier dans le ras d'une rupture de câble ou d'une panne d'un dispositif moteur.

Dans ce but, chacun des ensembles de deux tambours entraînés par un moyen moteur et constituant un treuil est fixé sur la surface extérieure du corps creux, de manière que les tambours de chacun des treuils soient placés chacun à l'opposé d'un des tambours de l'autre treuil, par rapport à l'axe vertical du canal, le câble associé à chacun des tambours d'un premier treuil étant commun avec le tambour du second treuil situé à l'opposé par rapport à l'axe du canal et coopérant avec un ensemble de poulies de renvoi et au moins une poulie de support du grappin, sur son parcours entre les deux tambours sur lesquels il est enroulé à ses extrémités.

Afin de bien faire comprendre l'invention, on va maintenant décrire, à titre d'exemple non limitatif, en se référant aux figures jointes en annexe, un mode de réalisation d'un dispositif, de levage d'un assemblage combustible pour réacteur nucléaire à neutrons rapides, associé à une hotte de manutention.

La figure 1 est une vue en perspective avec arrachement et coupe partielle d'une hotte le manutention d'un assemblage combustible comportant un dispositif de déplacement suivant l'invention.

La figure 2 est une vue en perspective du dispositif de déplacement de l'assemblage combustible associé à la hotte représenté sur la figure 1.

La figure 3 est une vue en élévation latérale et en coupe partielle du dispositif de déplacement suivant l'invention représenté sur la figure 2.

La figure 4 est une vue de dessus suivant 4 de la figure 3.

Les figures 5, 6 et 7 sont des vues schématiques correspondant respectivement aux figures 2, 3 et 4, montrant les éléments principaux et le fonctionnement d'un dispositif de déplacement suivant l'invention.

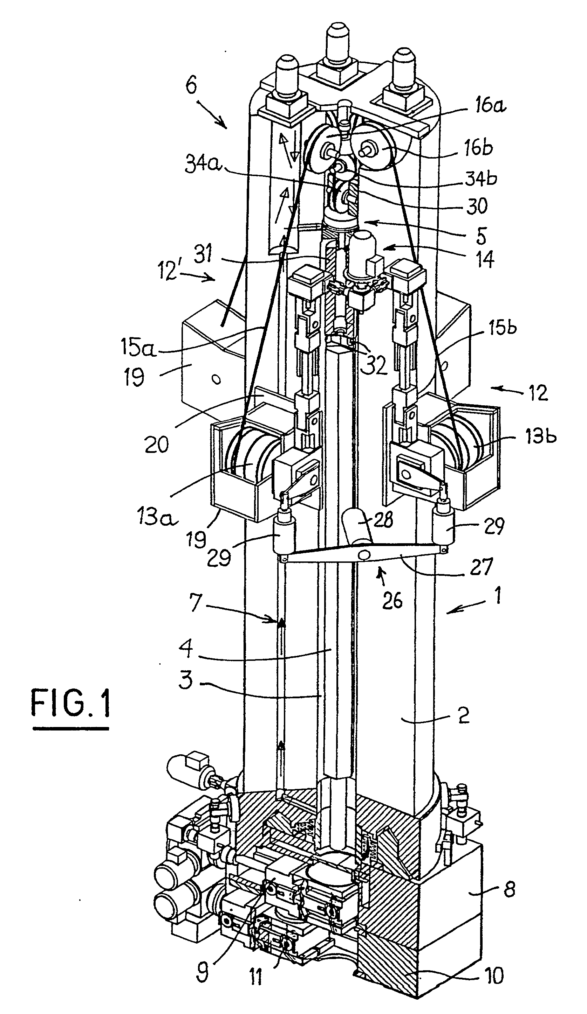

Sur la figure 1, on voit une hotte de manutention d'un assemblage combustible pour réacteur nucléaire désignée de manière générale par le repère 1. La hotte comporte un corps de hotte 2 le forme cylindrique comportant à sa partie centrale et suivant son axe, un canal 3 traversant le corps 2 de la hotte suivant toute sa longueur. Le canal 3 sert de logement pour un assemblage 4 dont on assure la manutention en utilisant la hotte 1.

L'assemblage combustible 4 est suspendu à un grappin 5 qui permet d'assurer son maintien et son déplacement dans la direction verticale, à l'intérieur du canal 3 et dans son prolongement axial, grâce à un dispositif de déplacement suivant l'invention désigné de manière générale par le repère 6 et qui sera décrit plus en détail dans la suite du texte.

Le corps 2 de la hotte est constitué par une pièce massive en acier de forte épaisseur dans la direction radiale et de grande longueur.

Dans le cas d'un assemblage combustible pour réacteur à neutrons rapides dont la longueur est supérieure à 4 mètres et présentant une section de forme hexagonale dont le côté a une longueur de 125 mm, le corps 2 de la hotte présente un diamètre extérieur de 1,30 m, un canal central 3 d'un diamètre de 0,30 m et une longueur de l'ordre de 6 m. Le corps de la hotte présente donc une épaisseur de paroi de 0,50 m ; sa masse totale est voisine de 55 tonnes.

La partie inférieure du corps 2 se raccorde au support 8 d'une vanne de hotte 9 motorisée permettant de réaliser l'ouverture ou la fermeture étanche de l'extrémité du canal 3 à sa partie inférieure débouchant à l'extrémité du corps 2. Le support 8 de la vanne de hotte 9 est susceptible de se raccorder au support 10 d'une vanne 11 permettant de réaliser l'ouverture ou la fermeture étanche d'un puits de traversée, par exemple un passage de traversée d'une dalle recouvrant la cuve d'un réacteur remplie de sodium liquide et renfermant le coeur du réacteur. Lorsque les vannes 9 et 11 sont superposées et ouvertes, on peut déplacer l'assemblage combustible 4 dans la direction verticale, d'une position immergée dans le sodium liquide à sa position de transfert à l'intérieur de la hotte 1, en utilisant le dispositif de levage 6 suivant l'invention.

Le dispositif de levage permet également de faire passer l'assemblage de sa position à l'intérieur de la hotte à une position immergée dans le sodium liquide remplissant la cuve du réacteur nucléaire.

La hotte 1 comporte également un circuit 7 de refroidissement par circulation de gaz permettant d'évacuer la chaleur dégagée par l'assemblage combustible 4, après sa sortie de la cuve du réacteur nucléaire.

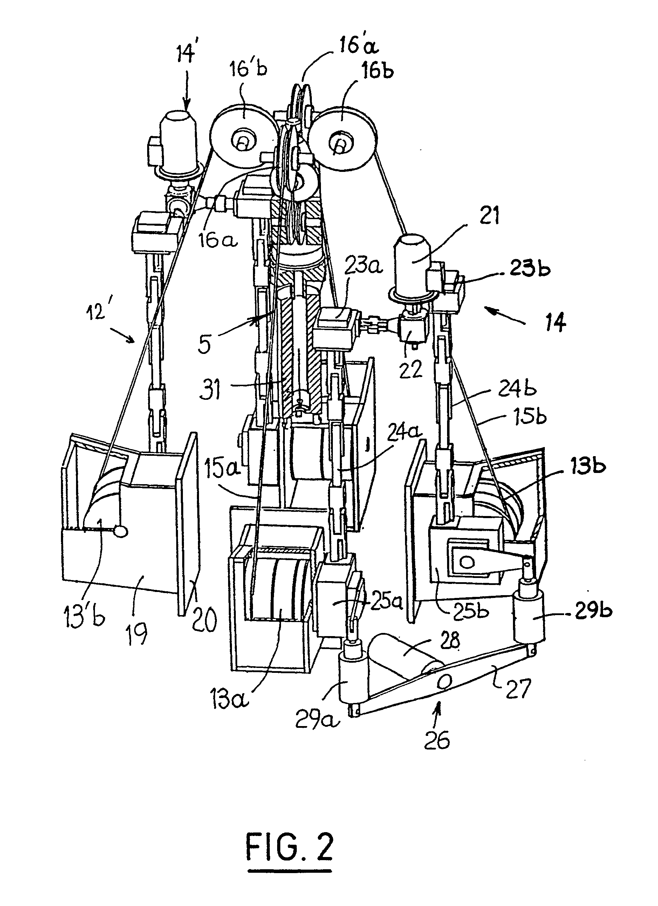

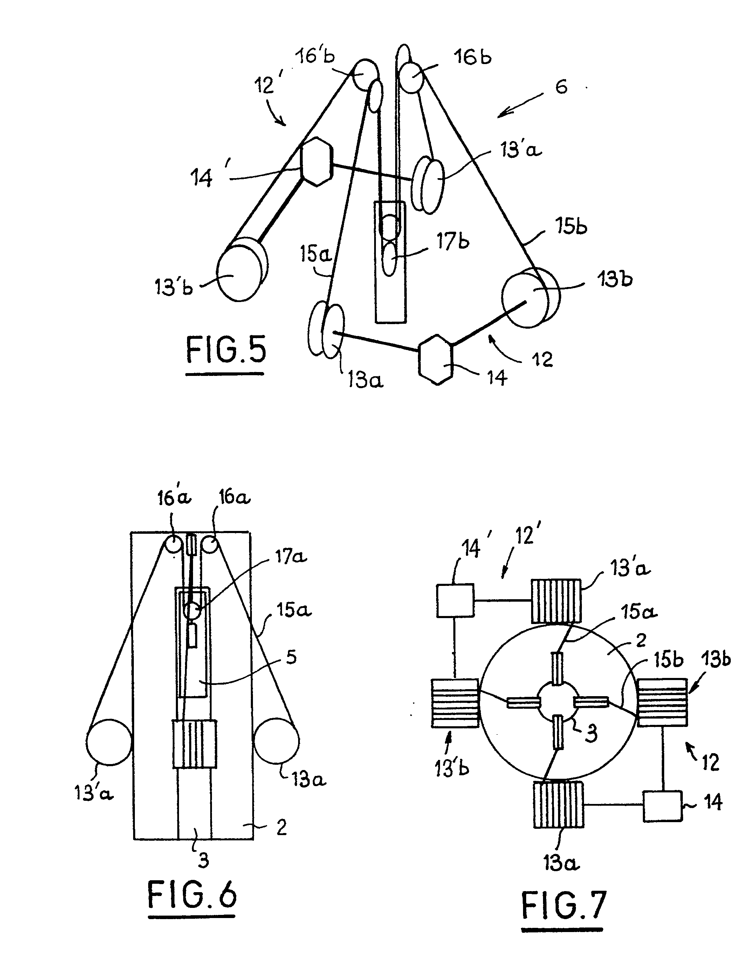

On va maintenant se reporter aux figures 2, 3 et 4 ainsi qu'aux figures 5, 6 et 7, pour décrire le dispositif de déplacement suivant l'invention désigné de manière générale par le repère 6 et associé à la hotte de manutention 1.

Les éléments correspondants sur les figures 1, 2, 3 et 4 d'une part et 5, 6 et 7 d'autre part portent les mêmes repères.

En se reportant à la figure 5, on voit que le dispositif de déplacement 6 suivant l'invention comporte un premier treuil 12 et un second treuil 12' à deux tambours 13a et 13b (13'a et 13'b pour le treuil 12') entraînés par un même dispositif moteur 14 (14' pour le treuil 12').

En se reportant à la figure 7, on voit que les treuils 13a, 13b, 13'a, 13'b sont disposés autour du corps 2 de la hotte 1 dans des positions situées sensiblement à 90° les unes des autres.

Un même câble 15a est enroulé à ses extrémités sur les tambours 13a et 13'a placés dans des positions sensiblement symétriques par rapport à l'axe du canal 3 et du corps 2, c'est-à-dire placés à l'opposé l'un de l'autre par rapport à l'axe vertical du canal 3.

De même, un même câble 15b est enroulé à ses extrémités sur les tambours 13b et 13'b placés dans des positions situées à l'opposé l'une de l'autre par rapport à l'axe du canal 3, à la périphérie du corps 2.

Comme il est visible sur les figures 5 et 6, le câble 15a, dans sa partie située entre les tambours 13a et 13'a, pusse sur une première poulie de renvoi 16a montée rotative sur le corps 2 de la hotte, puis sur une poulie de support 17a montée sur le corps du grappin 5 et enfin sur une seconde poulie de renvoi 16'a.

De la même manière, le câble 15b passe sur une première poulie de renvoi 16b, sur une poulie de support 17b et sur une seconde poulie de renvoi 16'b, dans sa partie située entre les tambours 13b et 13'b.

On va maintenant se reporter à la figure 1 ainsi qu'aux figures 2, 3 et 4, pour décrire plus en détail le dispositif de déplacement suivant l'invention représenté de manière schématique sur les figures 5, 6 et 7.

Chacun des tambours 13a, 13'a, 13b, 13'b est monté rotatif autour d'un axe horizontal, dans un boîtier 19 solidaire d'une semelle de fixation 20 qui est vissée sur un méplat usiné sur la surface extérieure du corps 2, dans sa partie supérieure.

Les quatre boîtiers 19 des tambours 13a, 13b, 13'a, 13'b sont disposés à 90° les uns des autres autour du corps 2 de la hotte.

Les tambours 13a et 13b du treuil 12 sont entraînés en rotation par un même dispositif moteur 14 comportant un moteur électrique 21, un élément de transmission à renvoi d'angle 22 et, pour l'entraînement de chacun des tambours 13a et 13b respectivement, deux réducteurs secondaires 23a et 23b, deux arbres à cardan 24a et 24b et deux réducteurs principaux 25a et 25b reliés au boîtier 19 du tambour correspondant.

Les réducteurs principaux 25a et 25b sont des réducteurs du type à corps flottant dont le corps est monté sur l'arbre d'entraînement du tambour correspondant 13a ou 13b.

Le treuil 12 comporte un ensemble d'équilibrage 26 à palonnier reliant les moyens d'entraînement des tambours 13a et 13b, par l'intermédiaire de leurs réducteurs flottants.

L'ensemble 26 comporte un palonnier 27 monté pivotant sur le corps 2 de la hotte, par l'intermédiaire d'un palier 28 solidaire de la hotte et d'un axe monté rotatif dans le palier et solidaire du palonnier 27 à sa partie centrale.

Chacune des branches du palonnier est reliée, à son extrémité, à un dispositif d'équilibrage à ressort (29a ou 29b) comportant une tige de piston reliée par un bras de liaison au corps du réducteur flottant correspondant (25a ou 25b) et des moyens de rappel élastiques constitués par des rondelles Belleville en appui sur la tige du piston, à l'intérieur du corps du dispositif d'équilibrage correspondant (29a ou 29b).

L'ensemble 26 permet d'équilibrer les charges supportées par les câbles 15a et 15b, pendant les déplacements de la charge constituée par l'assemblage combustible, à l'intérieur du canal 3 de la hotte et dans son prolongement axial.

Dans le cas d'un déséquilibre momentané, le basculement du palonnier 27 autour de son axe entraîne un rééquilibrage des charges, sous l'effet du déplacement des tiges de piston coopérant avec les moyens élastiques de rappel. Les couples transmis par l'ensemble moteur à chacun des tambours sont ainsi rééquilibrés, si bien que la tension et la charge subies par chacun des câbles 15a et 15b reviennent très rapidement à une valeur d'équilibre.

Seul le treuil 12 comporte un ensemble d'équilibrage de charge 26, le treuil 12' ne comportant pas un tel dispositif d'équilibrage. Il est en effet suffisant qu'un des deux treuils comporte un dispositif d'équilibrage, dans la mesure où les câbles 15a et 15b sont enroulés à leurs extrémités sur les tambours 13a, 13'a, 13b, 13'b placés dans des positions situées à l'opposé l'une de l'autre par rapport à l'axe du canal 3 correspondant à l'axe de déplacement de la charge.

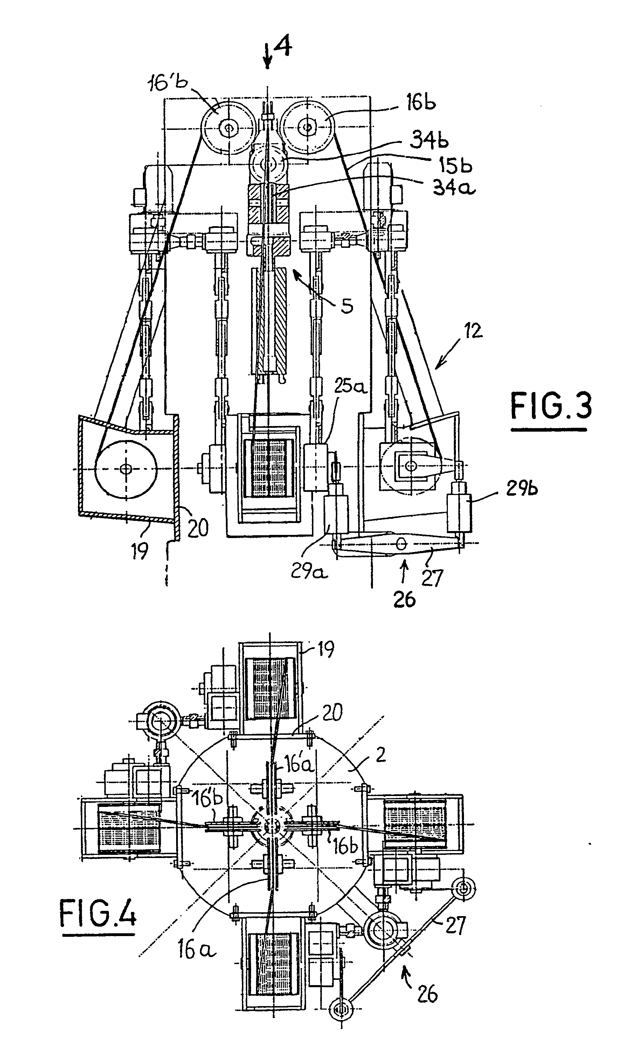

Comme il est visible sur les figures 2 et 3, chacun des câbles 15a et 15b passe sur deux poulies de renvoi 16a (16'a pour le câble 15a) et 16b (16'b pour le câble 15b).

Les poulies de renvoi 16a, 16'a, 16b et 16'b sont montées rotatives autour d'axes horizontaux dans la partie supérieure du corps de la hotte 2, de manière que les couples de poulies 16a, 16'a et 16b, 16'b comportentdes gorges de guidage du câble correspondant situées dans deux plans de symétrie axiale du corps 2 de la hotte. Ces deux plans de symétrie axiale sont perpendiculaires entre eux et correspondent aux plans de symétrie des couples de tambour 13a, 13'a et 13b, 13'b placés à l'opposé l'un de l'autre de part et d'autre du corps de la hotte 2.

Comme il est visible sur les figures 1, 2 et 3, le grappin 5 d'accrochage de l'assemblage 4 comporte un corps 30 constituant sa partie supérieure et un élément tubulaire de suspension 31 constituant sa partie inférieure et muni de moyens d'accrochage 32 de l'assemblage combustible 4.

Dans le support 30 du grappin sont montées deux poulies de support 34a et 34b dont les gorges d'enroulement du câble correspondant 15a ou 15b sont situées dans les plans de symétrie axiale de la hotte 2 définis par les couples de poulies de renvoi 16a, 16b et 16'a, 16'b.

Les câbles 15a et 15b sont engagés dans la partie inférieure de la gorge des poulies de support 34a et 34b respectivement, pour assurer la suspension de l'assemblage 4, par l'intermédiaire du grappin 5.

Chacun des câbles 15a et 15b passe donc successivement, sur son parcours entre les tambours situés dans des positions opposées par rapport à l'axe du canal 3 de la hotte, sur une première poulie de renvoi, sur une poulie de support et sur une seconde poulie de renvoi.

De cette manière, en faisant tourner les tambours des treuils 12 et 12', soit dans le sens de l'enroulememt, soit dans le sens du déroulement les câbles 15a et 15b, on obtient un déplacement de la charge constituée par l'assemblage combustible 4 fixé au grappin 5, dans la direction verticale correspondant à l'axe du canal 3, soit vers le haut, soit vers le bas.

Le dispositif suivant l'invention présente une redondance permettant d'assurer le déplacement de la charge et sa retenue dans le cas d'une panne d'un des ensembles moteurs 14 et 14' et/ou dans le cas de la rupture de l'un des câbles de suspension et de déplacement 15a et 15b.

Chacun des tambours 13a, 13b et 13'a, 13'b des treuils 12 et 12' est prévu pour permettre d'enrouler une longueur de câble supérieure à la longueur nécessaire pour remonter la charge jusqu'à sa position supérieure, telle que représentée sur la figure 1, en utilisant les deux treuils 12 et 12'.

Dans le cas où l'un des ensembles moteurs 14 ou 14' subit une panne pendant la remontée le la charge, le treuil entraîné par le second ensemble moteur est alors capable d'assurer à lui seul la remontée le la charge jusqu'à sa position supérieure, par enroulement d'une surlongueur de câble sur chacun de ses deux tambours. Les tambours du second treuil dont l'ensemble moteur est en panne restent en effet immobiles pendant la remontée et constituent des éléments fixes d'accrochage des extrémités de chacun des câbles 15a et 15b.

De même, dans le cas où l'ensemble moteur 14 ou 14' de l'un des treuils 12 ou 12' subit une panne pendant la descente de la charge, le dispositif le déplacement suivant l'invention est susceptible de réaliser la descente de la charge jusqu'à sa position la plus basse. Pour cela, chacun des câbles 15a et 15b présente une longueur supérieure à la longueur nécessaire pour descendre la charge jusqu'à sa position la plus basse en utilisant les deux treuils.

La surlongueur de chacun des câbles 15a et 15b permet d'assurer la descente de la charge jusqu'à son point le plus bas en utilisant uniquement l'un des deux treuils, les tambours du second treuil dont l'ensemble moteur est en panne restant immobiles et assurant la fixation d'une des extrémités des câbles 15a et 15b.

En outre, les câbles 15a et 15b se croisent au niveau du support 30 du grappin et sont susceptibles d'assurer indépendamment l'un de l'autre la suspension de la charge, par l'intermédiaire d'une poulie de support du grappin.

Dans le cas d'une rupture de l'un des câbles 15a ou 15b, pendant l'utilisation du dispositif de déplacement suivant l'invention, le second câble est capable de reprendre la charge sans que cette charge subisse un déséquilibre notable.

En effet, dans le cas de la rupture de l'un des câbles, le levier relié au corps du réducteur flottant du tambour correspondant se déplace et entraîne, par l'intermédiaire de la tige de piston du dispositif 29 correspondant, un basculement du palonnier 27 de l'ensemble d'équilibrage 26. Le levier est mis en butée, par l'intermédiaire de la tige de piston agissant sur le moyen de retenue élastique et l'on évite un à-coup dans le fonctionnement du dispositif de déplacement par déformation du moyen élastique de retenue constitué par des rondelles Belleville.

La charge se maintient dans sa position d'équilibre et le câble restant est susceptible d'assurer le maintien et le déplacement de cette charge.

Le dispositif de déplacement de charge suivant l'invention présente donc une très grande sûreté de fonctionnement et assure le déplacement et le maintien de la charge, même dans le cas d'une panne d'un ensemble moteur et/ou d'une rupture de câble.

En outre, ce dispositif peut être facilement intégré à un ensemble de transport d'une charge tel qu'une hotte de manutention d'un assemblage combustible, tout en permettant une conception de cet ensemble de transport telle que son volume soit réduit et ses possibilités d'utilisation accrues.

La répartition des tambours des deux treuils autour du corps de la hotte, dans une disposition en croix, permet de réduire au maximum l'encombrement total de la hotte, d'éviter de placer à la partie supérieure de cette hotte, des moyens de levage encombrants, et ainsi d'abaisser le niveau du centre de gravité.

Les ensembles moteurs de chacun des treuils peuvent en outre être disposés par rapport aux tambours dont ils assurent l'entraînement, dans une position éloignée de ces tambours permettant de faciliter la mise en place des moyens moteurs et de diminuer l'encombrement total du dispositif.

L'invention ne se limite pas au mode de réalisation qui a été décrit.

C'est ainsi que la disposition en croix des tambours peut être différente de celle qui a été décrite et représentée, les plans axiaux de symétrie de ces tambours pouvant faire un angle différent de 90°. Dans tous les cas cependant, les tambours de chacun des treuils sont placés chacun à l'opposé d'un tambour du second treuil par rapport à l'axe vertical du puits correspondant à l'axe de déplacement de la charge.

Les ensembles moteurs d'entraînement des treuils peuvent être réalisés sous une forme différente de celle qui a été décrite. Cependant, il est avantageux le concevoir ces ensembles moteurs de manière qu'ils puissent être éloignés des tambours dont ils assurent l'entraînement, pour faciliter leur mise en place sur l'ensemble de transport tel qu'une hotte de manutention auquel est associé le dispositif de déplacement.

Le dispositif d'équilibrage de charge entre les deux câbles peut être réalisé sous une forme différente d'un palonnier relié à deux réducteurs flottants d'entraînement des tambours d'un treuil, par l'intermédiaire de moyens d'amortissement élastiques.

Le grappin de suspension de la charge peut également être réalisé sous une forme différente de celle qui a été décrite qui est propre à l'utilisation du grappin à l'intérieur d'une hotte de manutention d'un assemblage combustible prélevé dans le coeur d'un réacteur nucléaire.

Enfin, le dispositif de déplacement suivant l'invention peut être associé à un ensemble comportant un canal vertical ménagé à la partie centrale d'un corps creux différent d'une hotte de manutention d'un assemblage combustible. Cet ensemble peut constituer aussi bien un ensemble de transport mobile qu'un ensemble fixe de déplacement d'une charge dans la direction verticale.

## Revendications

1.- Dispositif de déplacement d'une charge (4) dans la direction verticale, suivant l'axe d'un canal (3) ménagé à la partie centrale d'un corps creux (2), comportant au moins deux ensembles de deux tambours (13a, 13b, 13'a, 13'b) entraînés par deux dispositifs moteurs (14, 14') sur lesquels sont enroulés deux câbles (15a, 15b) de suspension et de déplacement d'un grappin (5) mobile dans le canal (3) et dans son prolongement axial, comportant des moyens d'accrochage (32) de la charge (4) et un support (30) muni de poulies (34a, 34b) sur lesquelles passent les câbles (15a, 15b), caractérisé par le fait que chacun des ensembles de deux tambours (13a, 13b, 13'a, 13'b) entraînés par un moyen moteur (14, 14') et constituant un treuil (12, 12') est fixé sur la surface extérieure du corps creux (2), de manière que les tambours (13a, 13b, 13'a, 13'b) de chacun des treuils (12, 12') soient placés chacun à l'opposé d'un des tambours (13a, 13b, 13'a, 13'b) de l'autre treuil (12, 12'), par rapport à l'axe vertical du puits (3), le câble (15a, 15b) associé à chacun des tambours (13a, 13b) d'un premier treuil (12) étant commun avec le tambour (13'a, 13'b) du second treuil (12'), situé à l'opposé, par rapport à l'axe du canal (3) et coopérant avec un ensemble de poulies de renvoi (16a, 16b, 16'a, 16'b) et au moins une poulie de support (34a, 34b) du grappin (5), sur son parcours entre les deux tambours (13a, 13b, 13'a, 13'b) sur lesquels il est enroulé a ses extrémités.

2.- Dispositif de déplacement suivant la revendication 1, caractérisé par le fait que les tambours (13a, 13b, 13'a, 13'b) des treuils (12, 12') sont disposés autour du corps creux (2), dans une disposition en croix, les positions des quatre tambours (13a, 13b, 13'a, 13'b) étant décalées angulairement de 90° l'une par rapport à l'autre, autour de l'axe du canal (3) correspondant à l'axe de déplacement de la charge (4).

3.- Dispositif de déplacement suivant l'une quelconque des revendications 1 et 2, caractérisé par le fait que chacun des tambours (13a, 13b, 13'a, 13'b) est susceptible d'enrouler une longueur de câble (15a, 15b) supérieure à la longueur nécessaire pour réaliser le déplacement de la charge (4) jusqu'à sa position la plus haute.

4.- Dispositif de déplacement suivant l'une quelconque des revendications 1 à 3, caractérisé par le fait que chacun des câbles (15a, 15b) présente une longueur supérieure à la longueur de câble nécessaire pour déplacer la charge (4) jusqu'à sa position la plus basse.

5.- Dispositif de déplacement suivant l'une quelconque des revendications 1 à 4, caractérisé par le fait qu'il comporte de plus un ensemble (26) de rééquilibrage de charge entre les deux câbles (15a, 15b) relié à des moyens d'entraînement (25a, 25b) de chacun des deux tambours (13a, 13b) de l'un des treuils (12).

6.- Dispositif de déplacement suivant la revendication 5, caractérisé par le fait que les moyens d'entraînement (25a, 25b) de chacun des tambours (13a, 13b) du treuil (12) sont constitués par des réducteurs du type à corps flottant et que l'ensemble (26) de rééquilibrage de charge est constitué par un palonnier (27) monté pivotant sur le corps creux (2) par sa partie centrale et portant à ses extrémités des dispositifs amortisseurs (29) comportant une tige de piston en butée sur des dispositifs de rappel élastiques et reliée par l'intermédiaire d'un levier au corps du réducteur flottant (25a, 25b) correspondant.

7.- Dispositif de déplacement suivant l'une quelconque des revendications 1 à 6, caractérisé par le fait que le moyen moteur (14, 14') d'entraînement de chacun des treuils (12, 12') est constitué sous la forme d'un ensemble comportant un moteur électrique (21) dans une position éloignée par rapport aux tambours (13a, 13b) entraînés par le moyen moteur (14).

8.- Dispositif de déplacement suivant la revendication 7, caractérisé par le fait que l'ensemble moteur (14) comporte, en plus du moteur électrique (21), un dispositif de transmission (22) à renvoi d'angle et, pour chacun des tambours (13a, 13b) entraînés par l'ensemble moteur (14), un réducteur principal (25a, 25b) et un réducteur secondaire (23a, 23b) entraîné par l'intermédiaire du dispositif à renvoi d'angle (22) et relié au réducteur principal, par l'intermédiaire d'un arbre comportant au moins une liaison à cardan (24a, 24b).

9.- Dispositif de déplacement suivant la revendication 8, caractérisé par le fait que les réducteurs principaux (25a, 25b) sont des réducteurs à corps flottant montés sur l'axe de rotation du tambour (13a, 13b) correspondant.

10.- Dispositif de déplacement suivant l'une quelconque des revendications 1 à 9, caractérisé par le fait que chacun des câbles (15a, 15b) passe successivement, sur son parcours entre les tambours (13a, 13'a, 13b, 13'b) disposés à l'opposé l'un de l'autre, sur une première poulie de renvoi (16a, 16b), sur une poulie de support (34a, 34b) et sur une seconde poulie de renvoi (16'a, 16'b), les poulies de renvoi (16a, 16'a, 16b, 16'b) étant montées rotatives sur le corps creux (2) et la poulie de support (34a, 34b) sur le support (30) du grappin (5), par l'intermédiaire d'axes horizontaux, les fonds de gorges des deux poulies de renvoi (16a, 16'a, 16b, 16'b) et de la poulie de support (34a, 34b) associées à chacun des câbles (15a, 15b) étant disposés dans un même plan vertical passant par l'axe du canal (3).

11.- Hotte de manutention d'un assemblage combustible pour réacteur nucléaire comportant un corps creux (2) de forme globalement cylindrique traversé par un canal (3) disposé suivant son axe, caractérisée par le fait qu'elle comporte un dispositif de déplacement suivant l'une quelconque des revendications 1 à 10 dont les treuils (12, 12') sont fixés sur la surface extérieure du corps creux (2) de la hotte.

12.- Hotte de manutention suivant la revendication 11, caractérisée par le fait que chacun des tambours (13a, 13b, 13'a, 13'b) des treuils (12, 12') est monté rotatif autour d'un axe horizontal dans un boîtier (19) fixé par l'intermédiaire d'une semelle (20) sur un méplat usiné sur la surface extérieure du corps cylindrique (2) de la hotte (1).

FIG.1

FIG. 2

FIG.3

FIG.4

16'b    16b    6

12'

14'    13'a

13'b    17b    15b

15a    13b

13a    14    12

FIG.5

16'a    16a

17a

15a

5

13'a    13a

2

3

FIG.6

14'    12'

13'a

15a    2

15b    13b

3

13'b    12

13a    14

FIG.7

Office européen
des brevets

# RAPPORT DE RECHERCHE EUROPEENNE

Numero de la demande

EP 91 40 0918

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2582438 (CEA/EDF)<br>* page 6, lignes 14 - 18 *<br>* page 7, ligne 31 - page 8, ligne 11; figures 1, 3 *<br>--- | 1, 7, 11 | G21C19/24<br>G21C19/20 |
| A | JOURNAL OF THE BRITISH NUCLEAR ENERGY CONFERENCE.<br>vol. 23, no. 5, octobre 1984, LONDON GB<br>pages 307 - 314; HAMAZAKI - MIZUNO: "Operation and maintenance of the fuel handling equipment at Tokai N.2BWR nuclear power station"<br>* page 307, colonne de droite, alinéa 2 - page 308, colonne de gauche, alinéa 1; figure 3 *<br>--- | 1 | |
| A | US-A-3179569 (FORTESCUE ET AL.)<br>* colonne 3, lignes 23 - 29 *<br>* colonne 5, lignes 29 - 60; figures 4-5 *<br>----- | 1, 7, 10 | |

| | DOMAINES TECHNIQUES RECHERCHES (Int. Cl.5 ) |
|---|---|
| | G21C |

Le présent rapport a été établi pour toutes les revendications

| Lieu de la recherche | Date d'achèvement de la recherche | Examinateur |
|---|---|---|
| LA HAYE | 26 JUIN 1991 | CAPOSTAGNO E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P0402)